Europäisches Patentamt

European Patent Office

Office européen des brevets

(19)

(11) Veröffentlichungsnummer: **0 025 201**
**A1**

(12) # EUROPÄISCHE PATENTANMELDUNG

(21) Anmeldenummer: 80105170.7

(22) Anmeldetag: 30.08.80

(51) Int. Cl.³: **A 61 C 11/00**
A 61 C 19/04

(30) Priorität: 08.09.79 DE 2936328

(43) Veröffentlichungstag der Anmeldung:
18.03.81 Patentblatt 81/11

(84) Benannte Vertragsstaaten:
AT BE CH DE FR GB IT LI LU NL SE

(71) Anmelder: Becker Dental-Labor GmbH.
Rotter Bruch 24
D-5100 Aachen(DE)

(72) Erfinder: Becker, Günter
Rotter Bruch 24
D-5100 Aachen(DE)

(72) Erfinder: Weiden, Horst
Buttergasse 14
D-5190 Stolberg(DE)

(74) Vertreter: Selting, Günther, Dipl.-Ing. et al,
Deichmannhaus am Hauptbahnhof
D-5000 Köln 1(DE)

(54) Verfahren und Vorrichtungen zum Reproduzieren von Kieferbewegungen.

(57) Zum Reproduzieren von Kieferbewegungen werden im Munde eines Patienten am Unterkiefer und Oberkiefer elektrische Abstandsmeßeinrichtungen befestigt, die bei Relativbewegungen zwischen Ober- und Unterkiefer die Abstände zwischen definierten Punkten der beiden Kiefer messen und an einen Speicher abgeben. Entsprechend den aufgezeichneten Meßdaten wird ein ein Kiefermodell (24,30) tragendes bewegbares Teil eines Artikulators (21) so geführt, daß es den aufgezeichneten Bewegungsablauf wiedergibt, wobei die Kombinationen der gemessenen Abstände zwischen den definierten Punkten von Unterkiefer (30) und Oberkiefer (24) in der gleichen Weise wieder eingestellt werden wie bei dem Meßvorgang.

FIG.3

VON KREISLER  SCHÖNWALD  EISHOLD  FUES

VON KREISLER  KELLER  SELTING  WERNER

0025201

Anmelderin:

Becker Dental-Labor GmbH.
Rotterbruch 24

5100 Aachen

PATENTANWÄLTE

Dr.-Ing. von Kreisler † 1973
Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

Sg/kh    7. Sept. 1979

DEICHMANNHAUS AM HAUPTBAHNHOF

D-5000 KÖLN 1

Verfahren und Vorrichtungen zum Reproduzieren von
Kieferbewegungen.

Die Erfindung betrifft ein Verfahren zum Reproduzieren
von Kieferbewegungen, bei welchem im Munde eines Patienten an Unterkiefer und Oberkiefer Hilfsvorrichtungen
befestigt werden, die bei Relativbewegungen zwischen
Ober- und Unterkiefer Meßdaten aufzeichnen, und bei
welchem entsprechend den aufgezeichneten Meßdaten
ein ein Kiefermodell tragendes bewegbares Teil eines
Artikulators geführt wird, sowie Vorrichtungen zur
Durchführung des Verfahrens.

Die Zähne von Oberkiefer und Unterkiefer haben idealerweise bei geschlossenem Mund eine bestimmte räumliche
Zuordnung zueinander. Werden die Kiefer gegeneinander gedrückt, so sollten sich die Zähne an mehreren
Druckpunkten gleichmäßig aneinander abstützen. Bei einer fehlerhaften Zahnstruktur entstehen beim Gegeneinanderdrücken
der Kiefer örtliche Druckstellen, die darauf zurückzuführen sind, daß die Zähne ungleichmäßig belastet
werden. Eine solche Fehlbelastung der Zähne kann allgemeines Unwohlsein zur Folge haben und zu Paradontose und anderen Erkrankungen führen.

Bei der Herstellung eines Zahnersatzes genügt es also nicht, den künstlichen Zahn an der dafür vorgesehenen Stelle des Kiefers zu befestigen. Eine wichtige Rolle spielen auch die Oberflächenkontur des Zahnes, seine Höhe und schließlich die Zahnstellung. Damit der künstliche Zahn beim Kauen und bei anderen Belastungen einen Teil der auf den Kiefer einwirkenden Kraft übernehmen kann, müssen bei seiner Gestaltung die Relativbewegungen zwischen Unterkiefer und Oberkiefer für den jeweiligen Patienten berücksichtigt werden. Die Bewegungsabläufe zwischen Unterkiefer und Oberkiefer sind bei verschiedenen Patienten stark unterschiedlich. Dies liegt daran, daß die Kiefergelenke verschiedenartig geformt sind. Von der Form der Kiefergelenke hängt der Bewegungsablauf nicht nur beim Öffnen und Schließen des Mundes, sondern auch bei seitlichen Bewegungen des Unterkiefers ab. Der Zahntechniker, der einen Zahnersatz herstellt, kann sich zur Einpassung eines Zahnes in einen Kiefer keines allgemein verwendbaren Modells bedienen, das die gegenseitige Zuordnung von Unterkiefer und Oberkiefer wiedergibt, weil die anatomische Gestaltung des Kiefergelenks und damit auch die Kieferbewegungen bei allen Menschen unterschiedlich sind.

Es ist bekannt, individuelle Modelle von Unterkiefer und Oberkiefer eines Patienten zu fertigen und in einen Artikulator einzusetzen, der die Funktion des Kiefergelenks übernimmt. Der Artikulator weist zahlreiche Einstellmöglichkeiten auf, um den Bewegungsablauf des Kiefergelenks des betreffenden Patienten möglichst exakt nachbilden zu können. Bevor der Artikulator eingestellt werden kann, muß eine Vermessung des Kiefergelenks des Patienten erfolgen. Hierzu werden Abdrücke der beiden Kiefer des Patienten gefertigt und nach diesen Abdrücken werden Referenzplatten hergestellt, die im Munde des Patienten befestigt werden. Die Referenzplatten weisen aus dem Munde herausragende Stangen auf, die an einer vor dem Gesicht des Patienten zu installierenden Apparatur befestigt werden und die Kieferbewegungen auf diese Apparatur übertragen. An der Apparatur befinden sich in der Nähe der Ohren des Patienten Schreibstifte, die die Beschriftung entsprechender Registrierkarten vornehmen. Der Zahnarzt bewegt, nachdem die Meßapparatur eingerichtet und eingestellt worden ist, den Unterkiefer des Patienten in verschiedenen Richtungen. Hierbei beschreiben die Schreibstifte Kurven auf den Registrierkarten. Diese Kurven werden nach komplizierten Verfahren ausgewertet und danach wird die Einstellung des Artikulators beim Zahntechniker vorgenommen.

Das bekannte Verfahren zur Nachbildung der Bewegungen der Kiefergelenke erfordert aufwendige Vorbereitungen und Messungen. Allein das Einrichten der Meßapparatur und die Durchführung der Messungen erfordern regelmäßig mehrere Stunden. Die Auswertung der Registrierkarten und die Einstellung des Artikulators sind ebenfalls sehr aufwendig und geben Anlaß zu Übertragungs-, Meß- und Einstellfehlern. Schließlich ist die Messung relativ ungenau, weil der Patient wegen der in seinem Munde befindlichen Referenzplatten und der aus dem Mund herausgeführten Stangen den Mund überhaupt nicht schliessen und die Zähne nicht gegeneinander drücken kann.

Hinsichtlich der aufzuzeichnenden Bewegungen ist er also stark eingeschränkt. Eine weitere Ungenauigkeit wird dadurch hervorgerufen, daß der Unterkiefer des Patienten vom Zahnarzt bewegt wird. Beim Bewegungsablauf spielt aber auch der Einfluß der Muskulatur eine Rolle, die in diesem Falle ausgeschaltet ist. Die Bewegungsführung durch den Zahnarzt hat also einen anderen Bewegungsablauf zur Folge als die natürliche muskelgeführte Bewegung des Patienten. Insgesamt ist bei dem bekannten Verfahren zum Reproduzieren von Kieferbewegungen sowohl das Meßverfahren als auch die Artikulatorbewegung ungenau. Das Meßverfahren und die Einstellung des Artikulators sind kompliziert und anfällig gegen Fehler und Störungen.

Aufgabe der Erfindung ist es, ein Verfahren der eingangs genannten Art anzugeben, das eine naturgetreue Wiedergabe der Relativbewegungen zwischen Oberkiefer und Unterkiefer ermöglicht, bei dem die Messung in kürzester Zeit durchführbar ist und das weder an den Zahnarzt noch an den Zahntechniker hohe Anforderungen stellt.

Zur Lösung dieser Aufgabe ist erfindungsgemäß vorgesehen, daß im Munde des Patienten elektrische Abstandsmeßeinrichtungen angeordnet werden, die die Abstände zwischen definierten Punkten von Oberkiefer und Unterkiefer während der Kieferbewegung messen und an einen Speicher abgeben und daß das bewegbare Teil des Artikulators entsprechend den gespeicherten Daten in der Weise gesteuert wird, daß es den aufgezeichneten Bewegungsablauf wiedergibt, wobei die Kombinationen der gemessenen Abstände zwischen
den definierten Punkten von Unterkiefer und Oberkiefer in der gleichen Weise wieder eingestellt
werden wie bei dem Meßvorgang.

Aus dem Munde des Patienten müssen lediglich dünne
Kabel herausgeführt werden, die zu den Abstandsmeßeinrichtungen führen. Der Patient ist daher hinsichtlich der Bewegungsmöglichkeit der Kiefer praktisch überhaupt nicht eingeschränkt. Er führt während
des Meßvorganges nach Anweisung des Zahnarztes bestimmte Kieferbewegungen aus. Die Signale, die die
Abstandsmeßeinrichtungen dabei abgeben, werden in
digitaler Form in dem Speicher gespeichert. Im
Labor des Zahntechnikers werden diese Daten wieder
abgerufen und mit ihnen wird ein Artikulator gesteuert, an dem Modelle des Unterkiefers und des
Oberkiefers des Patienten befestigt sind. Die Modelle
führen daher nachträglich die gleichen Bewegungen
aus, die der Patient zuvor ausgeführt hatte. Anhand
dieser Bewegungen kann der Zahntechniker die relativen Kieferstellungen studieren und das Wachsmodell des einzusetzenden künstlichen Zahnes genau auf die Bedürfnisse des Patienten abstellen.

Ein besonderer Vorteil besteht darin, daß die Kieferbewegungen während des Meßvorganges von dem Patienten mit eigener Muskelkraft durchgeführt werden,
so daß der Einfluß der Muskulatur auf den Bewegungsablauf mit berücksichtigt wird. Durch die genaue Wiedergabe der Kieferbewegungen am Artikulator erhält der Zahntechniker ein sehr präzises Bild von dem
Bewegungsablauf bei dem betreffenden Patienten.

In vorteilhafter Weiterbildung der Erfindung werden individuelle Kieferplatten für den Patienten
für Oberkiefer und Unterkiefer angefertigt, an denen
die Abstandsmeßeinrichtungen zur Durchführung des
Meßvorganges befestigt werden. Bei dem Reproduktionsvorgang werden dieselben Kieferplatten in Modelle
des Oberkiefers bzw. Unterkiefers eingesetzt und
die bei dem Meßvorgang gemessenen Abstandswerte werden bei dem Reproduktionsvorgang ohne Umrechnung
wieder eingeregelt. Auf diese Weise ist sichergestellt, daß bei hinreichend genauer Abstandsmessung
exakt die gleichen Kieferstellungen am Artikulator
wieder eingenommen werden. Da für den Meßvorgang
dieselben Kieferplatten benutzt werden wie für den
Reproduktionsvorgang, brauchen keine Bezugspunkte
am Patienten festgelegt zu werden, weil die Abstandsmeßeinrichtungen an den Kieferplatten ohnehin fest
sind.

Eine Vorrichtung zur Durchführung des erfindungsgemäßen Verfahrens ist dadurch gekennzeichnet, daß
an      Kieferplatten für den Oberkiefer und den Unterkiefer mindestens eine Abstandsmeßeinrichtung angeordnet ist, die den Abstand zwischen zwei definierten Punkten beider Kieferplatten mißt. Die Kieferplatten dienen lediglich der festen und definierten
mechanischen Anbringung der Teile der Abstandsmeßeinrichtung an den Kiefern. Die Abstandsmeßeinrichtung
kann aus einem Sender und einem Empfänger bestehen,
die mit jeweils einer Kieferplatte an einem Kiefer
befestigt werden. Es ist auch möglich, eine kombinierte Sende-Empfangseinrichtung an dem einen Kiefer und einen Reflektor an dem anderen Kiefer anzubringen. Als Abstandsmeßeinrichtungen können auch induktive Meßeinrichtungen benutzt werden, die den Abstand eines Metallteiles von einer Spule angeben. Abstandsmeßeinrichtungen, die Abstände der infrage kommenden Art mit hinreichender Genauigkeit messen, sind bekannt.

Vorzugsweise sind mindestens drei Abstandsmeßeinrichtungen vorgesehen. Diese können aus einem gemeinsamen Sender, der an der einen Kieferplatte befestigt ist, sowie aus mindestens drei Empfängern bestehen, die an der anderen Kieferplatte befestigt sind. Bei einer Relativbewegung der beiden Kieferplatten ändern sich die Abstände aller drei Empfänger. Da diese nach Art eines gleichseitigen Dreiecks angeordnet sind, und der Sender sich über dem Mittelpunkt dieses Dreiecks befindet, können alle infrage kommenden Bewegungsabläufe ziemlich genau bestimmt werden.

Der Artikulator, mit dem Gipsmodelle der Kiefer entsprechend den Bewegungen der Original-Kiefer nachgeführt werden, weist vorzugsweise eine feststehende Platte für das Modell des Oberkiefers und eine von einer Steuervorrichtung in mehreren Freiheitsgraden bewegbare Platte für das Modell des Unterkiefers auf. Die Steuervorrichtung für die bewegbare Platte kann an einen Vergleicher angeschlossen sein, der die bei dem Meßvorgang ermittelten, in einem Speicher gespeicherten Abstandsdaten mit den am Artikulator gemessenen Abstandsdaten vergleicht und die Abweichungen durch entsprechende Betätigung der Steuervorrichtung auf Null ausregelt.

Alternativ kann die Steuervorrichtung auch an eine Rechenschaltung angeschlossen sein, die die bei dem Meßvorgang ermittelten Abstandsdaten in Steuersignale für verschiedene Antriebseinrichtungen zum Bewegen der bewegbaren Platte umrechnet. In diesem Fall ist kein geschlossener Regelkreis vorhanden, bei dem die Regelabweichung zu Null gemacht wird, sondern die beim Meßvorgang ermittelten Abstandsdaten werden umgerechnet und als Führungsdaten für die Antriebseinrichtungen des Artikulators benutzt.

In vorteilhafter Ausgestaltung der Erfindung ist die bewegbare Platte des Artikulators über linear wirkende Antriebe mit einer Basisplatte verbunden. Ähnliche Systeme sind von Flugsimulatoren her bekannt.

Im folgenden wird unter Bezugnahme auf die Figuren ein Ausführungsbeispiel der Erfindung näher erläutert.

Es zeigen:

Figur 1 schematisch zwei Kieferplatten, die drei Abstandsmeßeinrichtungen tragen und im Munde eines Patienten befestigt sind,

Figur 2 ein Blockschaltbild der Aufzeichnungsvorrichtung für die Abstandsdaten,

Figur 3 eine perspektivische Darstellung eines Artikulators,

Figur 4 eine perspektivische Darstellung der Antriebseinrichtung des Artikulators und

Figur 5 ein Blockschaltbild der Steuerschaltung für
die Antriebseinrichtung des Oszillators.

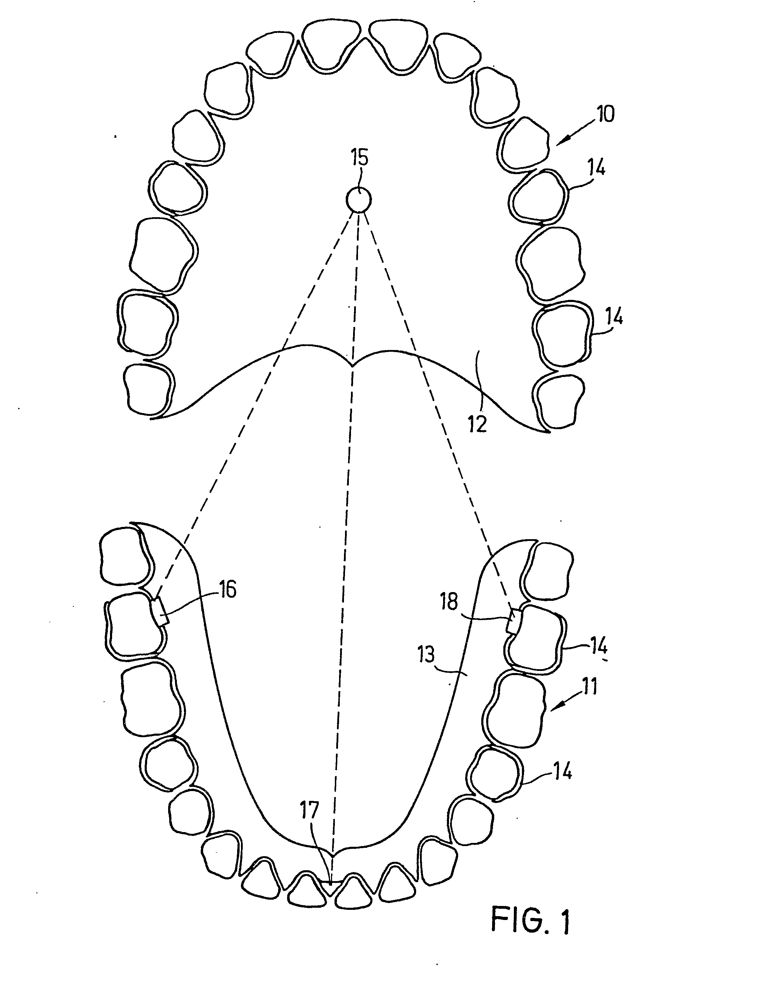

In Fig. 1 ist der Oberkiefer eines Patienten mit 10
und der Unterkiefer mit 11 bezeichnet. Als erstes
wird von dem behandelnden Arzt ein Alginatabdruck
von Oberkiefer und Unterkiefer genommen. Diese Abdrücke verwendet der Zahntechniker zum Anfertigen
einer Kieferplatte 12 für den Oberkiefer und einer
Kieferplatte 13 für den Unterkiefer. Die Kieferplatten 12 und 13 weisen Drahtklammern 14 auf, mit denen
sie an den Zähnen festgeklemmt werden können, so daß
sie einen festen Sitz an dem jeweiligen Kiefer bzw.
der Zahnreihe haben und sich nicht verschieben oder
unbeabsichtigt lösen können. Wie aus Fig. 1 ersichtlich ist, ist die Kieferplatte 12 als Gaumenplatte
ausgebildet, die den Gaumenbereich im wesentlichen
bedeckt und sich diesem anpaßt, während die Kieferplatte 13 für den Unterkiefer aus einem U-förmigen
Teil besteht, das Platz für die Zunge läßt. Die Kieferplatten 12 und 13, die aus Kunststoff bestehen,
passen sich den Kiefern an und behindern die Kieferbewegungen nicht, so daß der Patient den Mund vollständig schließen und öffnen sowie auch andere Kieferbewegungen ungehindert ausführen kann.

Etwa im Mittelpunkt der Kieferplatte 12 des Oberkiefers
ist ein Sender 15 befestigt, der in regelmäßigen Abständen kurze Impulse aussendet. Entsprechende Empfäger 16,
17, 18 befinden sich an der Kieferplatte 13 für den Unterkiefer. Die drei Empfänger 16, 17, 18 sind in den Ecken eines annähernd gleichseitigen Dreiecks angeordnet. Bei geschlossenem Mund befindet sich der Sender 15 annähernd über dem Mittelpunkt des von den Empfängern 16, 17, 18 gebildeten gleichseitigen Dreiecks. Durch die Laufzeit der Sendesignale vom Sender 15 zu dem jeweiligen Empfänger 16, 17, 18 kann der Abstand zwischen Sender und Empfänger bestimmt werden. Der Sender 15 bildet also zusammen mit jedem der Empfänger 16, 17 und 18 eine Abstandsmeßeinrichtung.

Die Ansteuerleitungen für den Sender und die Signalabführungsleitungen für die Empfänger 16, 17, 18 bzw. die Versorgungsleitungen sind in Fig. 1 nicht dargestellt. Sie werden in Form eines dünnen Leiterbündels aus der Mundöffnung herausgeführt.

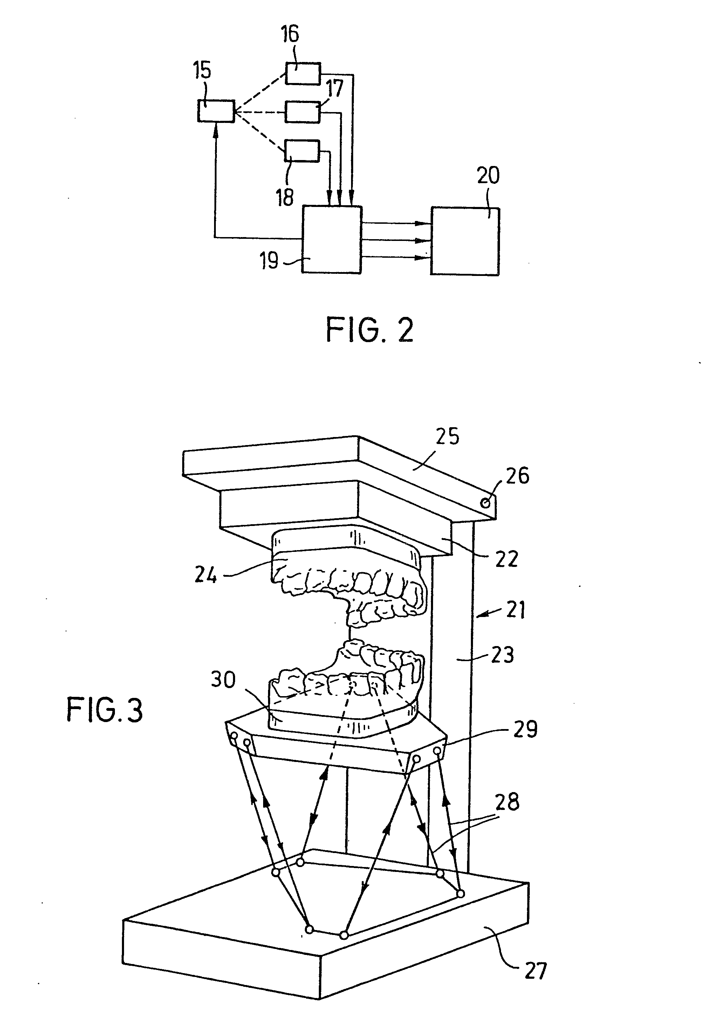

In Fig. 2 sind die Ansteuerleitung für den Sender 15 und die Signalabführungsleitungen der Empfänger 16, 17 und 18 dargestellt. Der Empfänger 15 wird von einem Steuergerät 19 getriggert. Sobald die Sendesignale von den Empfängern 16, 17 und 18 empfangen werden, geben diese entsprechende Signale an das Steuergerät 19 ab. Aus der Laufzeit zwischen der Aussendung des Impulses und der Ankunft der Empfangssignale bildet das Steuergerät 19 die Abstandswerte. Diese werden in digitale Form ungesetzt und an einen Speicher 20 abgegeben. Der Speicher 20 kann beispielsweise ein elektrischer oder magnetischer Speicher sein, z.B. ein Magnetbandspeicher.

Die in Fig. 2 dargestellte Meßeinrichtung befindet sich beim Zahnarzt. Dieser setzt dem Patienten die Kieferplatten 12 und 13 ein und fordert den Patienten auf, bestimmte Kieferbewegungen auszuführen. Während der Kieferbewegungen erfolgt kontinuierlich oder zu kurz aufeianderfolgenden Abtastzeitpunkten die Übergabe der jeweiligen Abstandswerte vom Steuergerät 19 zum Speicher 20. Im Speicher 20 werden also kontinuierlich oder quasikontinuierlich die Bewegungsabläufe aufgezeichnet.

In Fig. 3 ist ein Artikulator 21 dargestellt, der sich bei dem Zahntechniker befindet. Der Artikulator 21 weist an einem Traggestell 23 eine fest einstellbare Aufnahmevorrichtung 22 für das Gipsmodell 24 des Oberkiefers auf. Die Aufnahmevorrichtung 22 ist an einer im wesentlichen horizontalen Platte 25 befestigt, die an dem Rahmen 23 um eine horizontale Achse 26 schwenkbar und feststellbar ist.

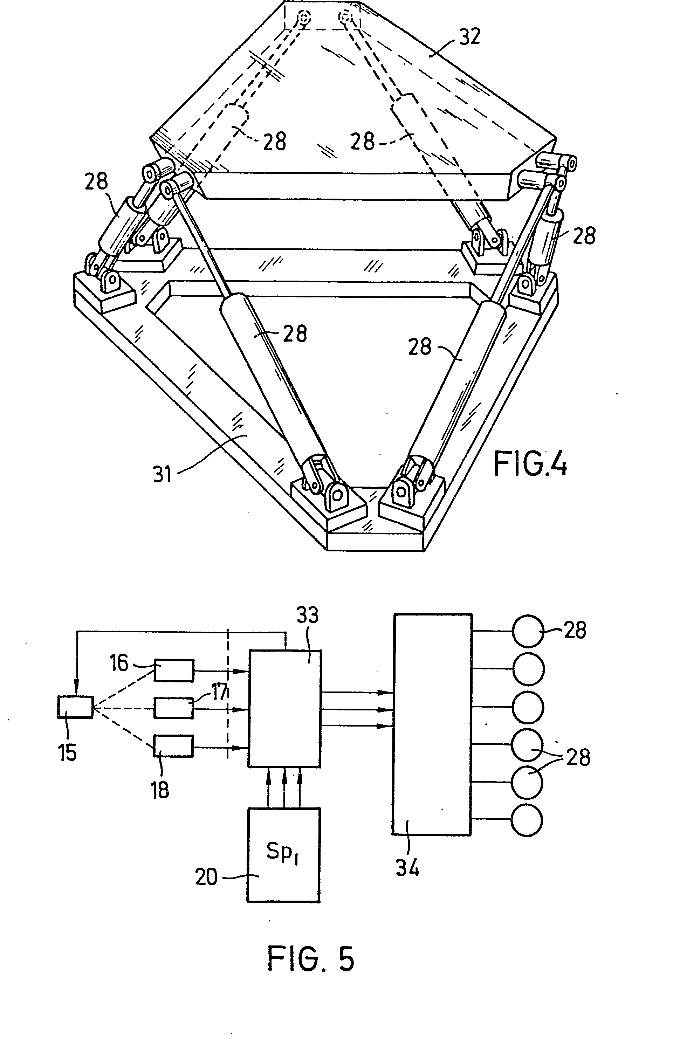

An dem unteren Teil des Rahmens 23 befindet sich eine Basisplatte 27, über der auf insgesamt sechs Linearmotoren 28 eine Aufnahmevorrichtung 29 für das Gipsmodell 30 des Unterkiefers angeordnet ist. Durch gesteuertes Verstellen der Linearmotore 28 kann die Aufnahmevorrichtung 29 mit dem Gipsmodell 30 entsprechend sechs Freiheitsgraden bewegt werden. Das Gipsmodell 30 für den Unterkiefer kann also bei entsprechender Steuerung der Linearmotore 28 Protrusionsbewegungen, Lateralbewegungen, Öffnungs- und Schließbewegungen sowie Parallelverschiebungen einzeln und in Kombination ausführen. Als Linearmotore können z.B. Spindelantriebe oder hydraulische oder pneumatische Kolbenzylindereinheiten benutzt werden. Die Antriebsvorrichtung mit den Linearmotoren 28 ist perspektivisch in Fig. 4 abgebildet. Sie weist einen dreieckförmigen unteren Rahmen 31 und einen dreieckförmigen oberen Rahmen 32 auf. Die Ecken des oberen Rahmens 32 liegen in der Mittelstellung, in der beide Rahmen parallel verlaufen über den Mittelpunkten der Seiten des unteren Rahmens 31. Von jeder Ecke des unteren Rahmens 31 führen zwei Linearmotore 28, die beispielsweise aus Kolbenzylindereinheiten bestehen, zu den benachbarten Ecken des oberen Rahmens 32.

In die Gipsmodelle 24 und 30 des Unterkiefers und des Oberkiefers können die entsprechenden Kieferplatten 12 bzw. 13 mit dem Sender 15 und den Empfängern 16, 17, 18 eingesetzt werden. Die Meßeinrichtung des Artikulators ist in Fig. 5 dargestellt. Der Sender 15 und die Empfänger 16, 17, 18 werden in gleicher Weise an ein Steuergerät 33 angeschlossen wie in der Aufnahmeeinrichtung nach Fig. 2. An das Steuergerät 33 wird außerdem der Speicher 20 angeschlossen. Das Steuergerät 33 vergleicht nun jeweils die Istwerte der gemessenen Abstände mit den von dem Speicher 20 ausgegebenen Sollwerten und gibt die Differenzsignale für jede Meßstrecke an eine Steuereinrichtung 34 für die Linearantriebe 28 ab. Die Steuereinrichtung 34 rechnet die Abweichungswerte in Stellwerte für die Linearantriebe 28 um, die daraufhin die Einstellung des unteren Gipsmodells so vornehmen, wie der Patient zuvor den Unterkiefer in bezug auf den Oberkiefer gehalten hatte. Auf diese Weise wird der beim Zahnarzt ausgeführte Bewegungsablauf an dem Artikulator nachgebildet.

Die in Fig. 5 links von der gestrichelten Linie dargestellten Teile können entfallen. Dies bedeutet, daß die Kieferplatten 12 und 13 bei der Auswertung nicht unbedingt in die Gipsmodelle 24 und 30 eingesetzt sein müssen. In diesem Fall erfolgt lediglich eine Nachführregelung, wobei die aus dem Speicher 20 ausgegebenen Werte über das Steuergerät 33 der Steuereinrichtung 34 zugeführt werden, die die Umrechnung in die Ansteuersignale für die Linearmotore 28 vornimmt.

Der Zahntechniker kann nun an den Gispmodellen 24 und 30 durch Wachsauftrag bzw. -abtrag an einzelnen Zähnen diejenigen Korrekturen vornehmen, die erforderlich sind, um eine möglichst gleichmäßige Lastverteilung auf die Zähne und die Kiefer beim Kauen zu bewirken.

A n s p r ü c h e

1. Verfahren zum Reproduzieren von Kieferbewegungen,
bei welchem im Munde eines Patienten am Unterkiefer
und Oberkiefer Hilfsvorrichtungen befestigt werden,
die bei Relativbewegungen zwischen Ober- und Unterkiefer Meßdaten aufzeichnen, und bei welchem entsprechend den aufgezeichneten Meßdaten ein ein Kiefermodell tragendes bewegbares Teil eines Artikulators geführt wird, d a d u r c h g e k e n n -
z e i c h n e t, daß im Munde des Patienten elektrische Abstandsmeßeinrichtungen angeordnet werden,
die die Abstände zwischen definierten Punkten an
Oberkiefer und Unterkiefer während der Kieferbewegung messen und an einen Speicher abgeben, und
daß das bewegbare Teil des Artikulators entsprechend
den gespeicherten Daten in der Weise gesteuert wird,
daß es den aufgezeichneten Bewegungsablauf wiedergibt, wobei die Kombinationen der gemessenen Abstände zwischen den definierten Punkten von Unterkiefer
und Oberkiefer in der gleichen Weise wieder eingestellt werden wie bei dem Meßvorgang.

2. Verfahren nach Anspruch 1, d a d u r c h g e -
k e n n z e i c h n e t, daß individuelle Kieferplatten
für den Patienten für Oberkiefer und Unterkiefer angefertigt werden, an denen die Abstandsmeßeinrichtungen
zur Durchführung des Meßvorganges befestigt werden,
daß bei dem Reproduktionsvorgang dieselben Kieferplatten in Modelle des Oberkiefers bzw. Unterkiefers eingesetzt werden, und daß die bei dem Meßvorgang gemessenen Abstandswerte bei dem Reproduktionsvorgang
ohne Umrechnung wieder eingeregelt werden.

3. Vorrichtung zur Durchführung des Verfahrens nach
Anspruch 1 oder 2, d a d u r c h   g e k e n n -
z e i c h n e t, daß an Kieferplatten (12, 13) für den
Oberkiefer und den Unterkiefer mindestens eine Abstandsmeßeinrichtung (15-16, 15-17, 15-18) angeordnet
ist, die den Abstand zwischen zwei definierten Punkten beider Kieferplatten mißt.

4. Verfahren nach Anspruch 3, d a d u r c h   g e -
k e n n z e i c h n e t, daß mindestens drei Abstandsmeßeinrichtungen vorgesehen sind.

5. Verfahren nach Anspruch 4, d a d u r c h   g e -
k e n n z e i c h n e t, daß die Abstandsmeßeinrichtungen einen gemeinsamen Sender (15) haben, der an der
einen Kieferplatte (12) befestigt ist, sowie mindestens
drei Empfänger (16, 17, 18), die an der anderen Kieferplatte befestigt sind.

6. Vorrichtung nach einem der Ansprüche 3 bis 5, d a -
d u r c h   g e k e n n z e i c h n e t, daß ein Artikulator (21) mit einer feststehenden Aufnahmevorrichtung (22) für das Modell (24) des Oberkiefers und einer
von einer Steuereinrichtung (34) in mehreren Freiheitsgraden bewegbaren Aufnahmevorrichtung 29 für das Modell
(30) des Unterkiefers vorgesehen ist.

7. Vorrichtung nach Anspruch 6, d a d u r c h   g e -
k e n n z e i c h n e t, daß die Steuereinrichtung (34)
für die bewegbare Aufnahmevorrichtung (29) an einen Vergleicher (33) angeschlossen ist, der die bei dem
Meßvorgang ermittelten, in einem Speicher (20) gespeicherten Abstandsdaten mit den am Artikulator
(21) gemessenen Abstandsdaten vergleicht und die
Abweichungen durch entsprechende Betätigung der
Steuereinrichtung (34) auf Null ausregelt.

8. Vorrichtung nach Anspruch 6, d a d u r c h
g e k e n n z e i c h n e t, daß die Steuereinrichtung (34) eine Rechenschaltung enthält, die die
bei dem Meßvorgang ermittelten Abstandsdaten in
Steuersignale für verschiedene Antriebseinrichtungen (28) zum Bewegen der bewegbaren Aufnahmevorrichtung (29) umrechnet.

9. Vorrichtung nach einem der Ansprüche 3 bis 8,
d a d u r c h  g e k e n n z e i c h n e t, daß
die bewegbare Aufnahmevorrichtung (29) des Artikulators (21) über linear wirkende Antriebe (28) mit
einer Basisplatte (27) verbunden ist.

FIG. 1

1 / 3

0025201

0025201

FIG. 2

FIG.3

0025201

FIG.4

FIG. 5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 259 984 (SEIDENBERG) <br> * ganzes Dokument * <br> -- | 1-4,6, <br> 7,9 |
| | US - A - 3 390 459 (SEIDENBERG) <br> * Ansprüche 1, 5, 6 * <br> -- | 3,4 |
| P | DE - A1 - 2 931 271 (MORO et al.) <br> * ganzes Dokument * <br> -- | 1,3,6 |
| A | DE - A1 - 2 439 125 (LEE) <br> -- | |
| A | FR - A1 - 2 278 312 (CHOURAQUI) <br> -- | |
| A | US - A - 3 321 832 (WEISBERG) <br> -- | |
| A | US - A - 3 452 439 (LEE) <br> ---- | |

**KLASSIFIKATION DER ANMELDUNG (Int.Cl.3)**

A 61 C 11/00
A 61 C 19/04

**RECHERCHIERTE SACHGEBIETE (Int. Cl.3)**

A 61 C 11/00
A 61 C 19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-12-1980 | SIMON |

EPA form 1503.1   06.78